# EUROPEAN PATENT SPECIFICATION

(11) **EP 2 613 675 B1**
(45) Date of publication and mention of the grant of the patent: **28.06.2023**
(21) Application number: 11767798.9
(22) Date of filing: 05.09.2011
(51) Int. Cl.: A47J 31/00

(54) **BUILT-IN COFFEE MAKER**
INTEGRIERTE KAFFEEMASCHINE
MACHINE À CAFÉ INTÉGRÉE

(30) Priority: 06.09.2010 IT RM20100469
(43) Date of publication of application: 17.07.2013
(73) Proprietor: Iacobucci, Lucio, 00194 Roma (IT)
(72) Inventor: Iacobucci, Lucio, 00194 Roma (IT)
(74) Representative: Raimondi, Adriana
(86) International application number: PCT/IT2011/000309
(87) International publication number: WO 2012/032554

(56) References cited:
- EP-A1- 1 284 117
- EP-A1- 1 532 905
- EP-A2- 1 157 647
- WO-A2-2009/043865
- US-A- 4 389 925
- US-A- 4 975 296
- US-A1- 2008 273 868

## Description

### Field of the invention

The present invention relates to a built-in coffee-making machine. In particular, the machine according to the invention, owing to its compact size, may be used on boats and yachts where there is a limited amount of space, but also on aircraft and/or within the home.

### Prior art

In order to define more clearly the technical scope of the present invention, the requirements of accessory machines used in the nautical sector, for example on yachts and boats in general, must be considered. A first major problem is that of the lack of space. Moreover, it is important to mention the problems posed by the constant movement of boats. In fact the presence of objects inside the boat which are free to slide or move on surfaces may be the cause of accidents, resulting in the need for securing and safety systems, even to perform simple operations, such as the preparation of a beverage, for example coffee. For use on boats, beverage dispensing machines, such as coffee machines, must satisfy specific requirements laid down in strict standards, owing to the highly saline and hence highly corrosive environments, in particular the European standard EN60945 (Maritime navigation, equipment and systems) and the standards EN55014, EN61000, EN60335 for EC brand-approval. Other standards relating to this type of apparatus are MIL-STD275, MIL-STD2000 and IPC610.

Moreover, while machines on aircraft operate with three-phase current which is typically used in aircraft power supply systems, machines on boats and those for civil use operate using two-phase current typically with a 220V output.

Coffee machines with dimensions which are small - but not sufficiently small for use in the nautical sector - are those of the type used in aircraft, as described in US6770435 and WO2002/091891. However, in both these documents the coffee dispensing devices are not satisfactory since they are difficult to use and a potential source of danger. For example, the patent application WO2002/091891 describes a pod holder, outside the coffee machine, which is operated by means of a handle system for performing closing and connection to the water supply. This arrangement may be dangerous owing to the parts projecting from the machine.

Built-in coffee machines for civil use (WO2001/72188) are known, but these are not suitable for nautical use both because of their dimensions and because of the way in which the beverage is dispensed. The dimensions are in fact considerable and not compatible with the limited space available on boats. Moreover, the dispensing system is bulky and in turn requires a lot of space. In addition, the coffee machine, in order to be inserted in the final housing, requires a compartment equipped with electric power supply and water connections necessary for operation thereof. The known arrangements have conventional connections which hinder removal of the machine in the event of a malfunction, thus making difficult to access the said connections in order to disconnect/connect them. Moreover said machines use a boiler vessel which is in fact under pressure for the whole of the time the machines are switched on, during which period the water is heated by means of direct contact with one or more resistances. This is a potential cause of danger in constantly moving environments such as marine and/or aeronautical environments.

US2007/0202734 describes built-in coffee machines which can be easily removed from their housing since they are mounted on rails. However, no lock or system for fixing the machine is present or visible on the rails; although the machine may be extracted easily by means of a simple pulling movement, it poses major safety problems. Moreover the electric power supply and water connections required for operation of the machine are not shown or they are of the conventional type.

Patent application EP 1157647 describes a coffee machine into which the pod is inserted with the aid of a drawer which is closed using a lever, outside the body of the machine, in order to activate dispensing of the coffee internally. A single drawer is provided, positioned in the top part of the machine, and also performs the function of an extraction chamber.

The patent US 4165821 describes a coffee machine which is not of the built-in type since it can be loaded only from the top. In addition there is a single drawer at the bottom of the machine which does not perform the function of collecting the used pods and which, in order to be properly positioned, must necessarily enter inside the supporting column of the machine.

The patent US 6779435 describes a coffee machine which contains a single drawer positioned in the top part of the machine. This drawer performs the function of a pod holder and, in order to operate, must close around a heating system which supplies water directly onto the pod; in this way the drawer acts as a pod-holder and dispensing of the beverage takes place within the drawer. The drawer occupies the whole of the front of the machine and the pod must be manually eliminated when the drawer is opened after use. The lack of practicality and safety of this system is evident.

The patent US 6176171 describes a coffee machine which does not use pods, but coffee powder. The machine has a side drawer for holding the filter paper, which does not cover entirely the front of the machine and projects from the compartment which houses the cup to be filled with beverage

The patent US4389925 discloses a beverage extracting and dispensing machine for use with cartridges and including a heat exchanger working with water under high pressure.

In the nautical sector considerable research is being carried out on beverage dispensing machines, in particular built-in coffee machines, which are characterized by a low weight and size, ease of use and maintenance, and improved safety features compared to those currently on the market.

According to the invention, by means of a specific combination of parts and a suitable choice of components, materials and forms, it is possible to provide innovative machines able to prepare not only coffee and other hot beverages by means of hot water dispensed from an outlet separate from the coffee discharge outlet, but also tea and herbal infusions. The configuration and the form described below result in a device which is more durable, easier and safer to use, as well as being lighter and smaller than the machines known hitherto. Further advantages of the invention will become clear from the following description.

### Summary of the invention

The present invention relates to a built-in machine for dispensing hot beverages as defined in appended claims.

In particular, the machine comprises a substantially aluminium supporting structure, side panels, a base and top part substantially made of aluminium, said machine being characterized in that it comprises parts which are configured and formed as described in the accompanying claims, so as to be used in particularly small spaces such as those present on-board vessels such as yachts and boats or aircraft and/or in very small size kitchens where there is a limited amount of space.

Further objects will become clear from the description of the invention.

### Brief description of the drawings

For a better understanding of the invention, the accompanying figures show a non-limiting example of the said invention.
Figure 1 is a schematic front perspective view of the machine A according to the invention combined with a module B, both engaged inside the prism-shaped compartment C of a standard-size built-in furniture unit with an overall height of 30 cm, occupying only half of its useful volume;
Figure 2 shows a schematic front perspective view of the assembly consisting of two machines A and two modules B; combinations different from those shown are also possible owing to the modular nature of the machine;
Figure 3 shows a schematic perspective view of the built-in furniture unit for housing the assembly according to Figure 2; the fitted rail systems D, D', with a generally L-shaped form on which the machines A and modules B slide, can be seen;
Figure 4 shows a schematic front perspective view of the machine A according to the invention;
Figure 5 shows a schematic top plan view of the machine A according to the invention;
Figure 6 shows a schematic front view of the machine A according to the invention;
Figure 7 shows a schematic rear view of the machine A according to the invention;
Figure 8 shows a schematic side view of the machine A according to the invention;

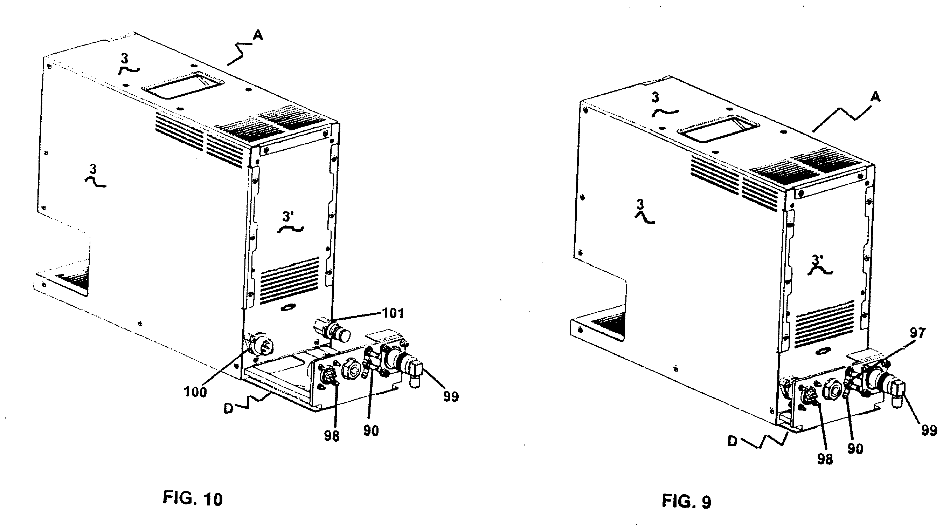

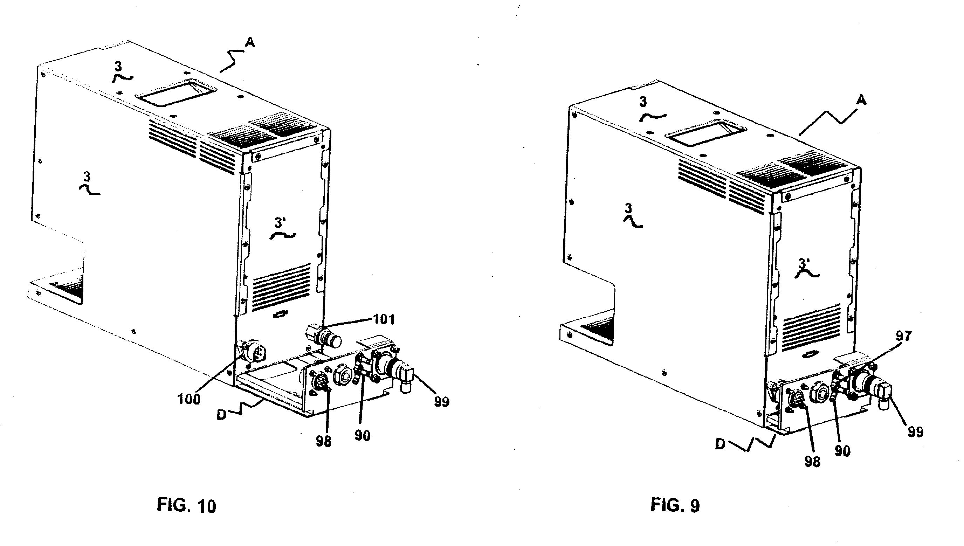

Figure 9 shows a schematic rear perspective view of the machine A according to the invention mounted on the fitted rail D;
Figure 10 shows the same view as that of Figure 9, but with the machine A partially extracted from the rail D;
Figure 11 shows a schematic lateral perspective view of a detail of the mechanical retaining system of the machine A on the fitted rail D;
Figure 12 shows a schematic perspective view of the base of the machine A which is formed in the manner of a slide for operational engagement in a sliding manner with the fitted rail D;
Figure 13 shows a first, schematic, exploded, lateral perspective view of the machine A, without the pod-holding unit;
Figure 14 shows a second, schematic, exploded, lateral perspective view of the machine A, without the pod-holding unit;
Figure 15 shows the same view as that of Figure 13, with the pod-holding unit;
Figure 16 shows the same view as that of Figure 14, with the pod-holding unit;
Figure 16A shows a variant of the machine to which a water tank is added laterally;
Figure 17 shows a schematic axonometric view of the heat exchanger used in the coffee machine according to the invention;
Figure 18 shows a schematic, exploded, axonometric view of the heat exchanger;
Figure 19 shows a longitudinally sectioned schematic view of the heat exchanger.

### Detailed description of the invention

The machine according to the invention is designed for preparing hot beverages such as short coffee, long coffee and tea in pre-dosed amounts and for supplying hot water.

For the preparation of the hot beverages it is envisaged using prepackaged single-dose capsules, typically in the form of pods, which contain the ingredient to be brought into contact with the water, such as coffee powder. Particularly advantageous are pods of the known type for automatic devices, where each pod consists of a single dose - in some cases precompressed - of coffee powder, in particular the aluminium pods manufactured by Nespresso^{®}. Although in this embodiment the machine may only supply coffee or hot water, it is possible to envisage embodiments in which different pods, also containing freeze-dried tea or milk, may be used for preparation of a hot beverage. Moreover, it is possible to use other types of pods, for example in the form of capsules, such as those described in WO2010/076048, although these are less preferred, since they are bulkier; it is also possible to use paper pods.

Owing to its essential form, the external design of the machine distinguishes it completely from the other machines which are currently produced for civil use. There are no levers or other external projecting operating systems which could create danger situations. The commands are located on a front control panel of the touch sensor type with luminous lamps and silk-screen printed indicators and the pod is inserted into a special fixed slit formed on the front of the machine. Different paths are provided for insertion and expulsion of the pod, as can be seen from the accompanying figures.

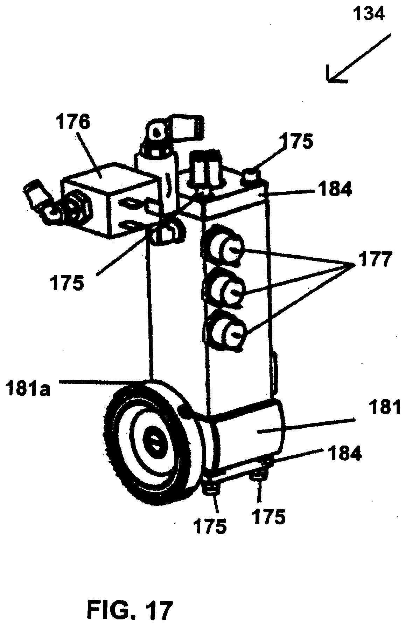

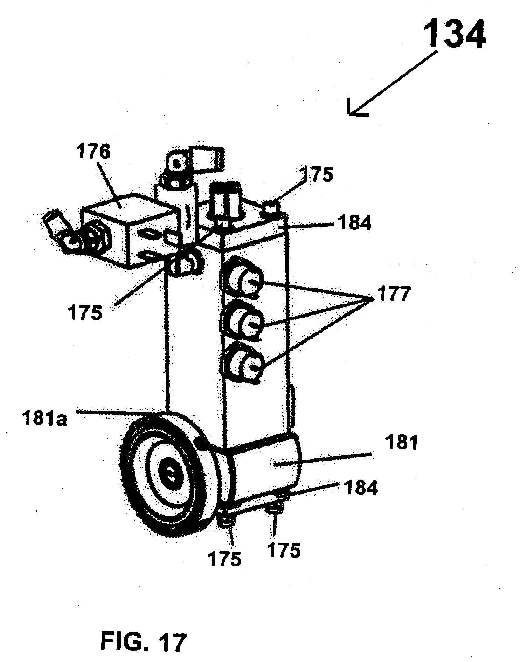

One feature of this machine consists in the absence of a pressurized boiler for heating the water, instead of which a heat exchanger is used, the water passing through the latter only at the time of dispensing, when the system is in communication with the external atmosphere (the terms "heater" and "heat exchanger" are used synonymously). In this way it is possible to avoid the danger resulting from the continued presence of water inside a pressurized vessel. Preferably, the heat exchanger system mounted on the coffee machine according to the invention is that shown in Figures 17-19. This heat exchanger system consists of a resistance which is located inside a helical shaped heating shaft, which is in turn contained inside a chamber provided with a front closure, an electrovalve for regulating the incoming water, thermal safety fuses and a temperature sensor. The power output of said heat exchanger system is for example 800 W both at 220 Volts ac and at 115 Volts ac and the system is optimized to dispense up to 50 ml of coffee while maintaining the coffee delivery temperature at 86°C ±3°.

This heat exchanger offers a notable series of advantages:
- reduced limescale formation, since the water does not remain stationary inside it;
- lower weight and smaller size;
- high heating efficiency while using less electric power;
- possibility of operation with a non-pressurized water source;
- suitability for operation also with different power supply sources.

Advantageously the coffee machine according to the invention is equipped with one or more heaters which are positioned above the pod-holding unit. With this arrangement the thermal efficiency is maximized, while the heat dispersion is minimized and there is a significant saving in terms of space. Where necessary, an additional heat exchanger system is also provided for the production of steam. In this case, only the inlet part has features in common with the rest of the machine, while the piping, pump and valves are specifically designed for this machine section.

Compared to the limited practical nature of the existing heaters used nowadays in this type of coffee machine and generally consisting of heating units which are not Teflon-lined, where the hot water is stored also when no beverage is being dispensed, thus resulting in the notable formation internally of limescale, the heat exchanger system used in the machine according to the invention remains instead full of water only for the time required for heating thereof (a few seconds); this results in the minimum formation of limescale and much more efficient production of heat and a more reliable performance over time of the coffee machine as a whole.

The pod-holding unit which comprises a container suitable for receiving the pod is situated inside the machine, below the heater. It may advantageously consist of a shell-like part with two halves which are hinged together and close around the pod when the beverage is dispensed.

Moreover, the pod holder is provided with a liquid inlet and outlet, the inlet being for the hot water and the outlet for the beverage, and is formed internally so as to optimize the flow of incoming water. The pod holder is also provided with means for expelling the pod, which are known per se. A pod holder which can be advantageously used is described in EP 1826148.

A drawer for collecting the used pods is provided below the pod holder so that the used pods can be stored and later removed when the machine is cleaned. The excess water from the heater is also conveyed into the drawer.

The machine is also provided with a compartment situated opposite the beverage/hot water or steam outlet nozzles and suitable for collecting the liquids which might accidentally spill owing to incorrect manual positioning of the receptacle to be filled with beverage. The compartment is closed at the top by a grille and may be provided with systems for fixing the receptacle in position.

In order to facilitate engagement and removal of the machine inside the compartments provided, the machine is provided with a base having a slide suitable for sliding on fitted rails which are fixed to the compartments which house the machine. Since the housing compartments are generally bare boxes, the rail is advantageously provided with connections for the electric power supply and for supplying/discharging the water.

Basically the machine is not fixed directly inside the furniture unit, but is housed therein by means of a slide sliding on fitted rails which are in turn fixed to the furniture unit and which provide the necessary electrical and hydraulic connections. In this way it is possible to install or remove very simply and quickly the machine (or other installed product of the same type, as will be seen below), without having to disassemble or remove other mechanical parts.

The machine has preferably very compact dimensions with a front side of about 15x30 cm (lxh). If we consider a normal kitchen module with nominal dimensions of 60 cm, this also allows the installation of other modules, such as a croissant heater, a water reservoir, a cappuccino maker, etc. (generically indicated as Module B in the figures).

The machine is further provided internally with a quick-locking system so that it can be locked in a rapid and functional manner on the slide system described above. This system, which is of the latch type, consists of a mechanical lever system made of steel. Basically, by means of a hook member, a steel pin is moved so as to engage (when the hook member is released and with the aid of a mechanical stop) inside a hole which is instead located on the slide. Once the pin of the latch has been inserted inside the hole in the rail the machine is locked and only by operating again the hook member of the latch can it be released. The system is also provided with a fixing screw which, when tightened, does not allow further free movement of the hook member, preventing completely removal of the machine from the slide.

The components of the machine are chosen so as to comply with the abovementioned nautical standards as well as with aviation standards, so as to ensure an MTBF (Mean Time Between Failures) of 5000 hours (in accordance with the ordinary maintenance schedule).

The machine may be prepared so as to have preferably the following technical specifications: depth 310-417 mm, width 140-180 mm, height 290-340 mm, weight 6.5-9.0 kg, power supply 100/240 Volts ac, power output up to 3500 W. The machine operates with water at the normal pressure supplied from a reservoir module, but in one embodiment thereof it may be provided with an inlet for the water pressurized to a value of between 0.5 and 3.0 bar.

The electrical and hydraulic interfaces, i.e. the incoming and outgoing water connectors and the electrical connectors, are chosen, prepared and positioned suitably on the rear of the machine. Preferably the electrical connector is an Amphenol MS3106A16S-1P and the hydraulic connector is a Hansen/Tuthill 2KL16F, although products with similar performance features may be used.

The material used is mainly anodized aluminium machined with numerical control machines so as to ensure a suitable mechanical strength together with lighter and high-quality finished parts. These machining operations are well-known to persons skilled in the art and allow the production of parts which are precision-machined to within very small tolerances. The use of plastic is kept to a minimum. The water supply pipes are preferably made of food-grade Teflon^{®} and the fittings are made of non-toxic material.

The electric circuit boards are treated superficially with a protective layer so as to withstand vibrations, resist moisture and not be subject to attack by fungi, bacteria or other organic contaminants.

The machine is equipped with a hydraulic section for supplying the water and a pump system for keeping the water flow constant inside said section, independently of the operating pressure present on the boat.

The hydraulic circuit is designed so that the failure of any active component (valves, pumps) does not create an overpressure within the circuit. The movement of the water inside the hydraulic system of the machine is ensured by pumps and controlled by electrovalves. The water inlet pressure is monitored by means of sensors.

In view of the particular mode of operation of the heater, which prevents the formation and deposition of limescale on its walls, it is not required to position any anti-limescale filter at the water inlet of the heat exchanger system.

In the event of an overpressure a suitably calibrated breather valve is positioned downstream of the pumps.

The hydraulic circuit of the machine consists of separate parts, i.e. single or pre-assembled parts which are interconnected by means of Teflon pipes. Only the water heater has a water inlet and outlet assembled on the outer part of the heater itself.

The electrovalves used for the heat exchanger system are of the type with a base piece and have the advantage that they eliminate some of the fittings since the base piece, which has an inlet hole and outlet hole for the fluid, is connected directly to the hydraulic distributor. These valves can be easily disassembled.

The electrovalves are of two types: two-way or three-way. The two-way electrovalves control the water flow, opening and closing, while the three-way electrovalves, which operate in the same manner as the two-way valves, additionally have a water discharge channel.

The electrovalves which manage the hot water section are chosen so as to withstand temperatures of at least up to 150°C and are fitted with ruby seals. The other seals of the machine are preferably made of Viton^{®}.

The unions on the hot water parts are made of stainless steel so as to ensure a good behaviour from both a thermal and an alimentary point of view (the unions of machines for civil use instead are made of nickelplated brass which may flake at high temperatures).

The electronic circuit is designed and made so as not to create electromagnetic interference with the on-board instrumentation and at the same time not be influenced by the latter. Filtering of the boards and all the power supply parts is therefore performed for example by means of EMI filters or filters with similar performance features, which are substantially able to eliminate the high-frequency components which may generate electromagnetic waves.

The machine is electrically protected against overtemperatures by manually resettable safety thermostats directly mounted on the heat exchanger system (for example made by the company Termix) and, within the hydraulic circuit, even in the event of breakage of the control electrovalves, there is no risk of the heat exchangers remaining under pressure, since they are equipped with three-way electrovalves which, when de-energized, are open towards the discharge outlet.

The machine is designed so as to be free of stagnant water: the water which is not used is conveyed to the discharge outlet and is collected inside the drawer for storing the used pods. In this way the formation of harmful microorganisms (algae, fungi and bacteria) inside the machine is prevented.

The machine according to the invention does not have external handles and is therefore safer than the machines which are at present on the market since it does not have parts which may get accidentally caught. The machine only has a handle inset in the top closing wall and not visible when the machine is mounted, so as to facilitate transportation thereof.

The machine and all the parts which may be extracted from it, such as the drawer, are protected against accidental entanglement since they are positioned in locations provided with self-locking devices which, once engaged, require a releasing action. In this way locking is performed automatically upon insertion inside the respective housings.

The machine is protected against electrical overloads by the use of fuses both on the low-voltage logic section and on the 100/240 Volt ac power section. Moreover, the electronic section has components and/or circuitry with active protection systems.

The management of the main functions of the machine is performed by an electronic section controlled by a microprocessor using an original software. It is also envisaged providing a USB port which, via a connection to an ordinary PC, allows reading of the machine log: for example, the number of operating cycles and/or the operating hours and/or other useful information for ordinary maintenance of the machine. Via this serial port it is also possible to input information into the machine and vary its operating parameters such as: quantity of water for the coffee function, water dispensing temperature.

The invention will now be illustrated with reference to the accompanying figures which are to be regarded as examples which do not limit the scope of the invention.

### Description of a preferred embodiment of the invention

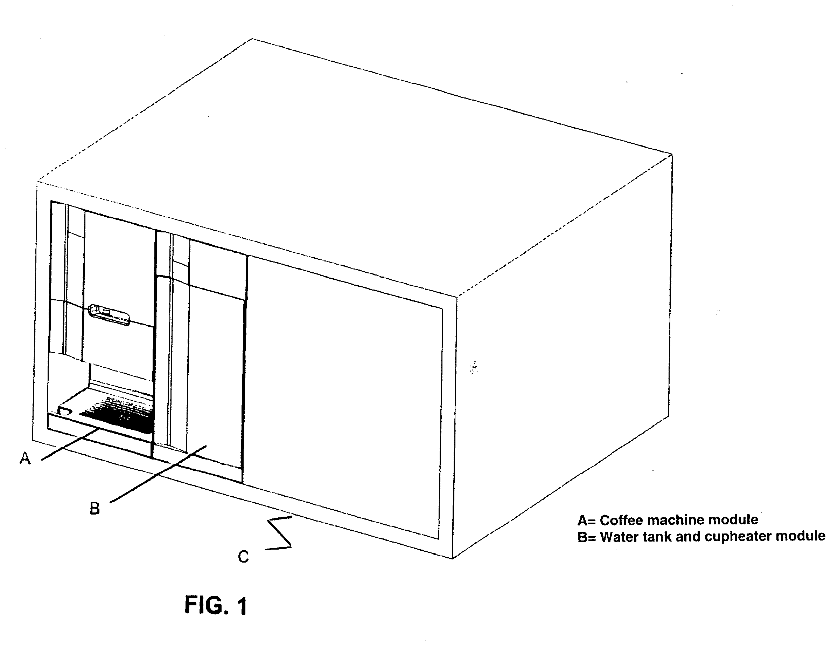

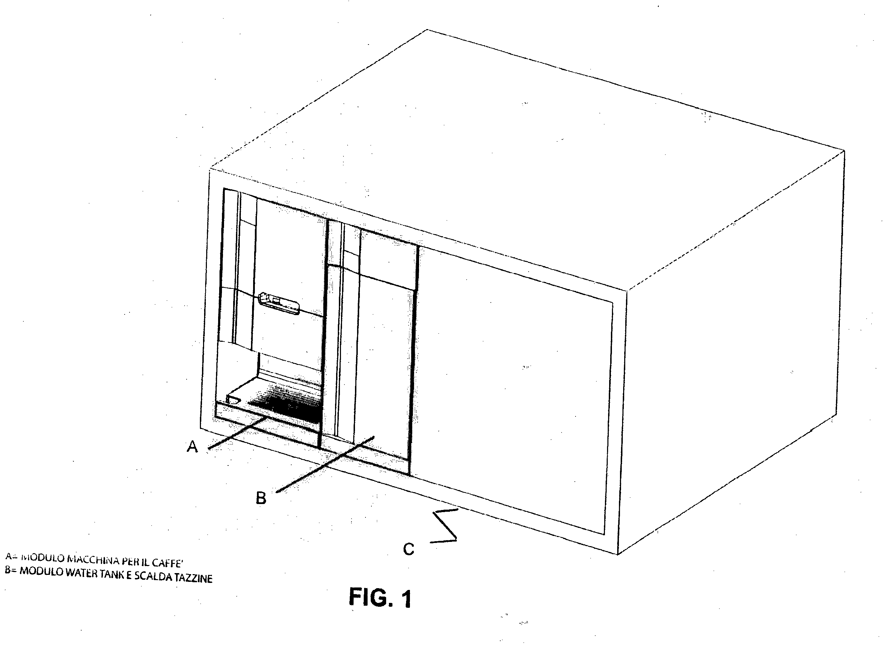

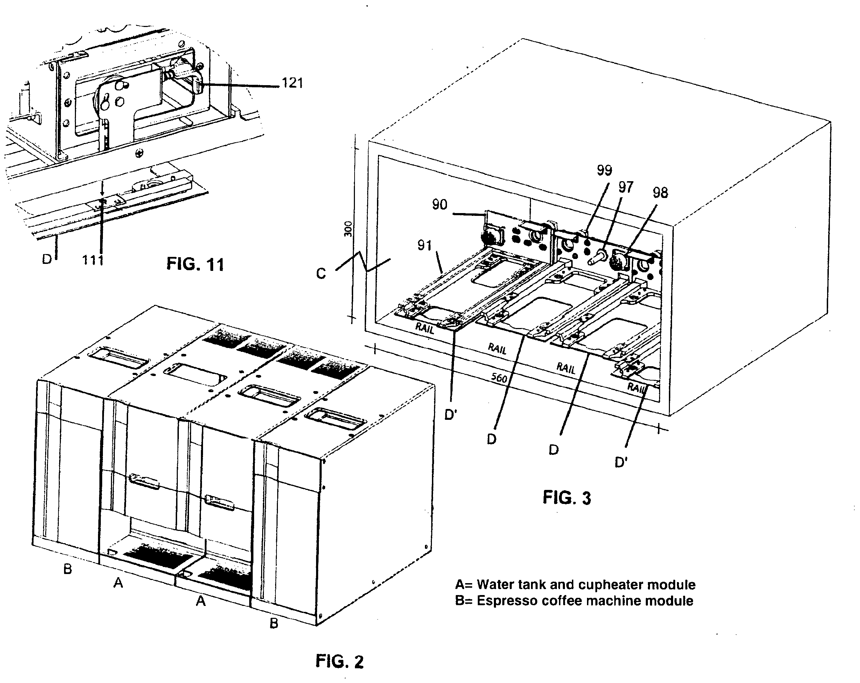

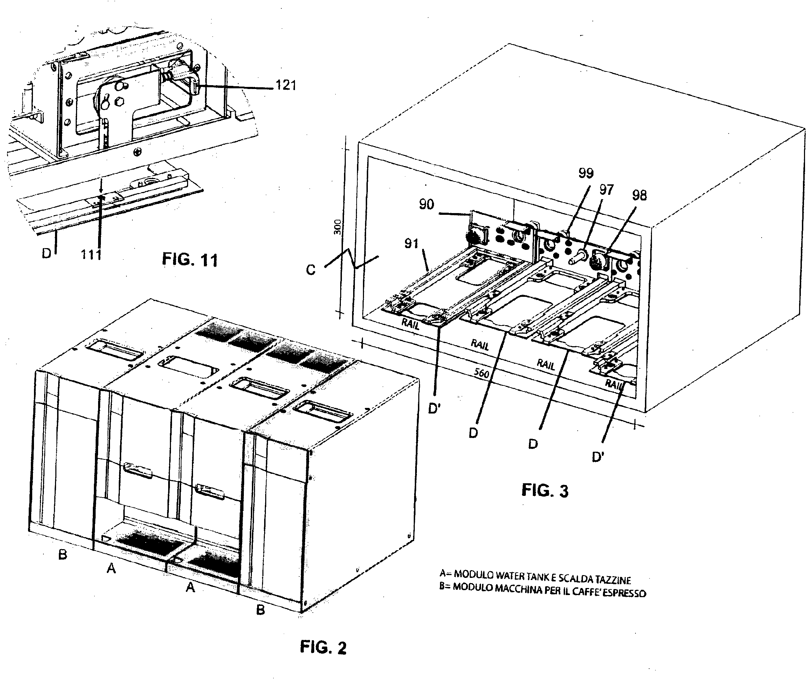

With particular reference to Figures 1 and 2, the machine A according to the invention is of the modular type with dimensions small enough such that a standard built-in furniture unit (60x60 cm) may house, along half its height and width, two such machines, for example centrally, with alongside two additional modules B having the function for example of housing a cup-heating device or water reservoir or cappuccino maker or croissant-heating device. Figure 3 shows four fitted rail systems, consisting of two identical pairs, D and D', suitable for receiving the base of each machine A and each additional module B. The form of the rail systems D and D' is not particularly specific in nature, but must allow the base of the machine A or the additional module B to slide easily on them. The rail systems are also fixed to the base of the furniture unit C by fixing means which are known per se. The rail systems D, D' have a generally L-shape form where the long side is formed by the rails 90 and the short side 91 provides the support for quick-fit connectors for the power supply 98 and the water inlet 99. The excess water is discharged inside the drawer 7. The element 97 is a centring piece which favours engagement between the machine and the guide.

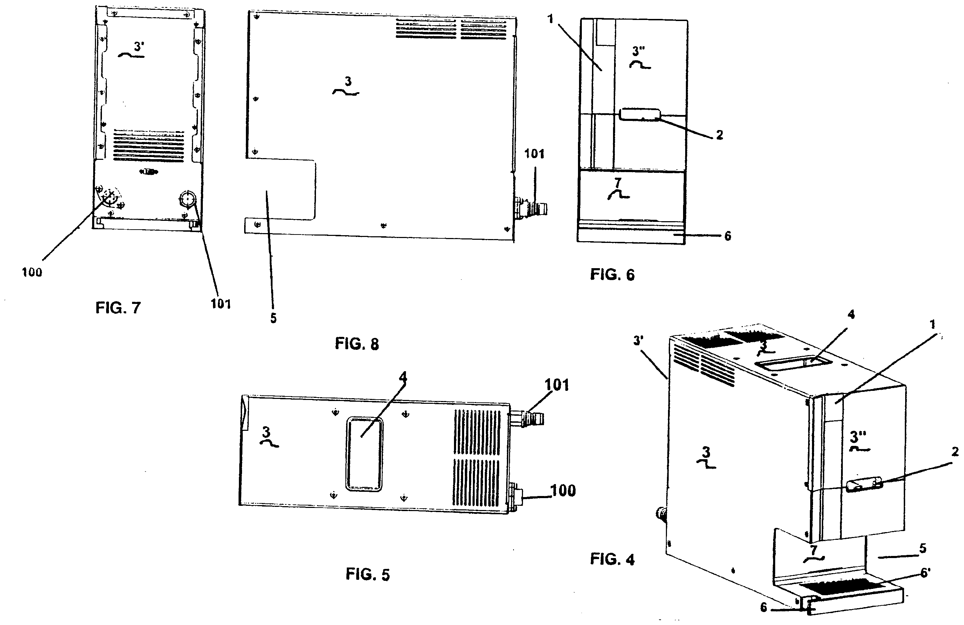

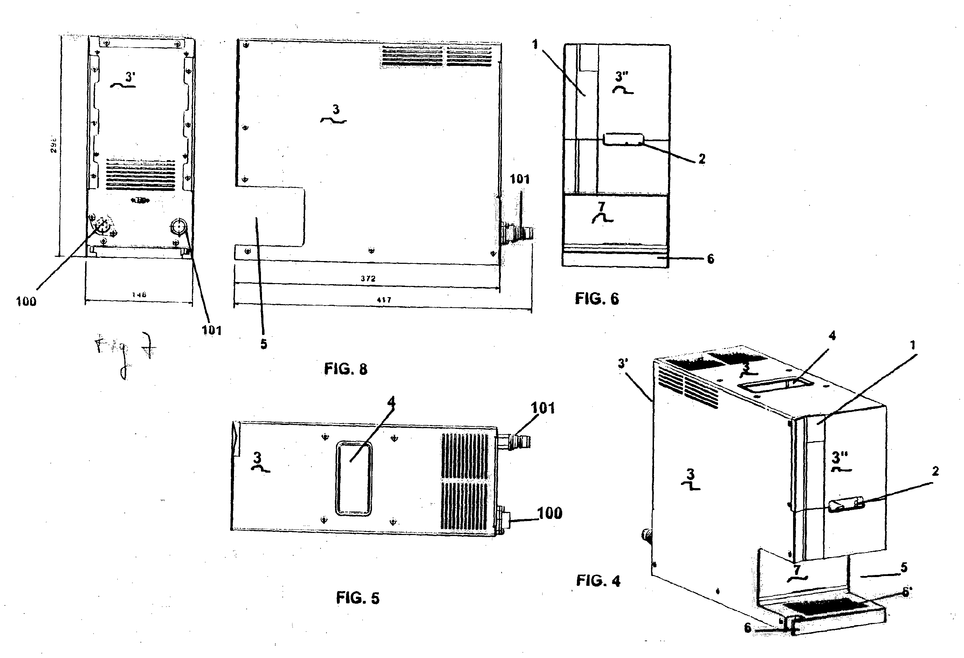

These connectors are connected to the corresponding connectors 100 and 101 (see Figure 7) present on the rear of the machine A. The quick-fit connectors 98 and 99 and the centring piece 97 are mounted on the short side 91 of the fitted rail system D. Corresponding rail systems D' may be provided for the module B.

Figures 4-8 show the outer form of the machine A according to the invention, which has a substantially parallelepiped shape, being made of aluminium, preferably a 6060, 7075 and 5754 alloy produced by the company Alcoa or Metra or some other product with a similar performance in terms of lightness and mechanical strength. The outer structure of the machine comprises a front control panel 1 of the touch sensor type (known to persons skilled in the art) with the controls of the various functions formed thereon by means of silkscreen-printing, for example: a) ON/OFF switch; b) "Coffee 1" switch; c) "Coffee 2" switch; d) "hot water" switch, the latter being able to be used to supply the hot water needed for the preparation of tea, herbal infusions and for the reconstitution of freeze-dried beverages. In an alternative embodiment, in addition to the functions described above, the following functions may also be silkscreen printed: e) Coffee 3; f) Steam; g) Drain This latter function allows emptying as far as possible of the hydraulic circuit of the machine.

The slit 2 for introducing the pod (not shown) is formed on one side of the control panel 1 which forms an integral unit with the part 3". 3 and 3' denote the covering panels of the machine A, the panel 3 having a generally U-shaped form and covering the sides and the top part of the machine, while the panel 3' forms the rear. The panel 3" is made of AISI 304 stainless steel, forming part of the front panel, and forms one piece with the control panel 1. 4 denotes a compartment which houses a concealable handle (not shown) for lifting and carrying the machine A in the event of its removal from the associated housing. Furthermore, at the front the machine A has an open compartment 5 which is provided for receiving the receptacle or jug or cup (not shown) for the beverages dispensed by the machine A. The top part of the open compartment 5 is delimited by the system for dispensing the liquid or beverage and, optionally, steam (not shown and of the type known per se). The open compartment 5 is also delimited by a second drawer 7, a vertical wall of which forms the back wall of the open compartment 5. The second drawer 7 is designed to collect the pods which fall automatically inside it after use. The bottom part of the open compartment 5 is delimited by a first drawer 6 which is covered at the top by a perforated plate 6' so that any accidentally spilled liquid may be collected at the bottom of the first drawer 6.

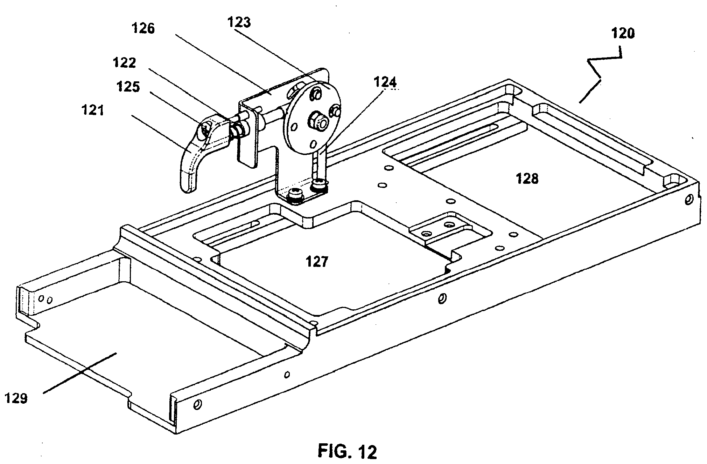

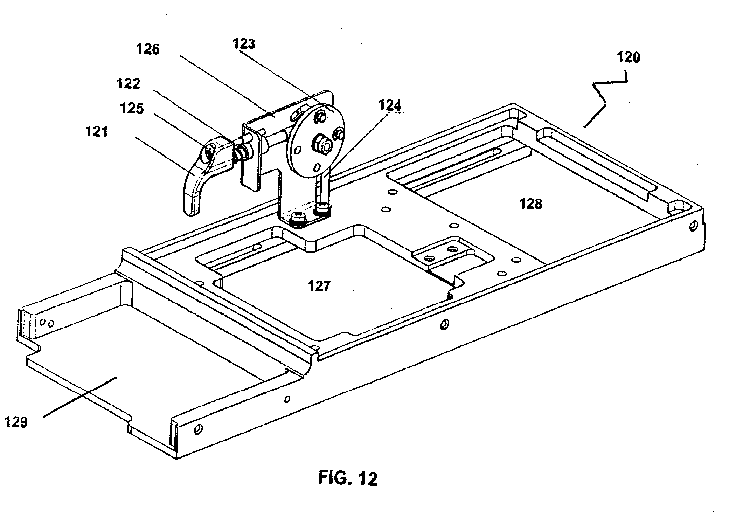

The machine A is housed inside the compartment of the built-in furniture unit C by means of sliding on the system of fitted rails D with the aid of guides formed on the base piece 120 (shown in Figure 12) which forms the base or the bottom of the machine A. In this way insertion/extraction of the machine A as well as maintenance and cleaning thereof are greatly facilitated. The machine is fixed to the base piece 120 by means of fixing systems which are known per se and not shown, such as screws. The base piece 120 is provided with weightreducing recesses 127, 128 and a compartment 129 for housing the first drawer 6.

In order to secure the machine A, a mechanical retaining system is envisaged (Figures 11 and 12), said system being provided with handle 121, spring 122, movement mechanism 123, pin 124 and safety screw 125 which are mounted on a support bracket 126. Opposite the pin 124 the rail system D is provided with a receiving hole 111 for the pin 124 which, once inserted, allows the machine A to be secured. The mechanical retaining system is housed on the rear of the second drawer 7.

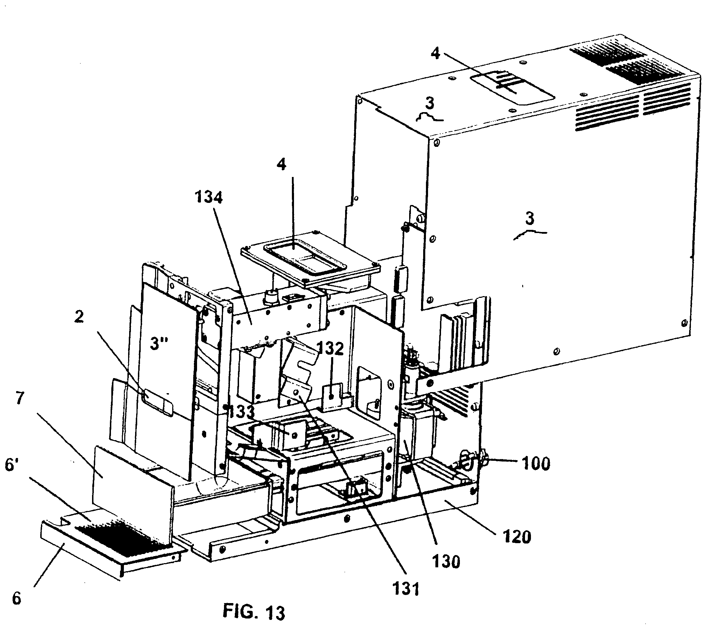

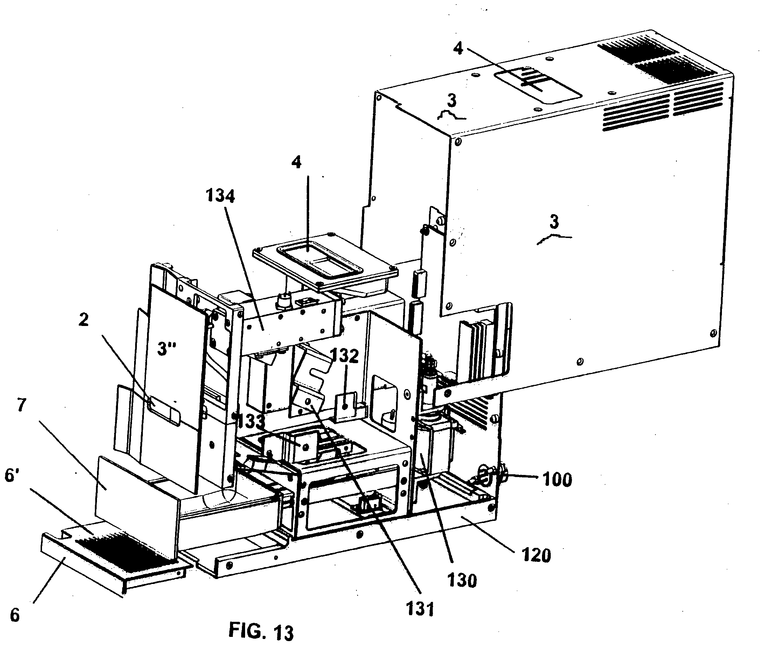

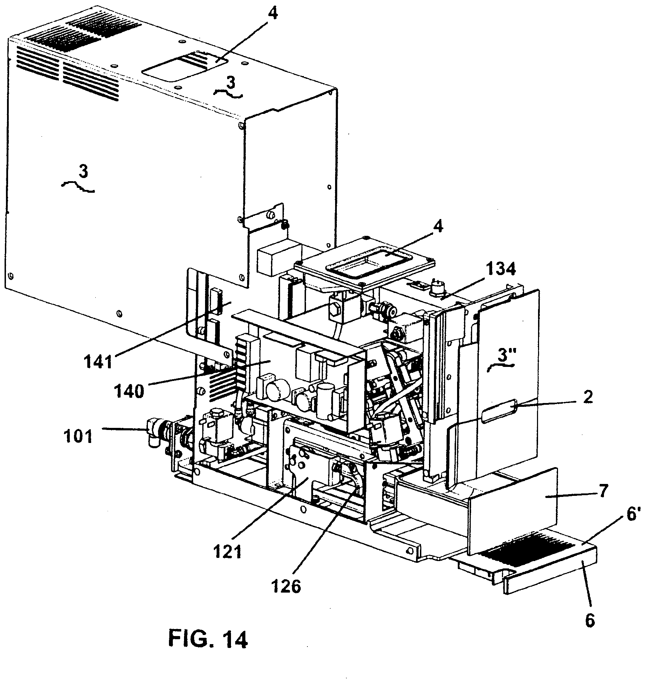

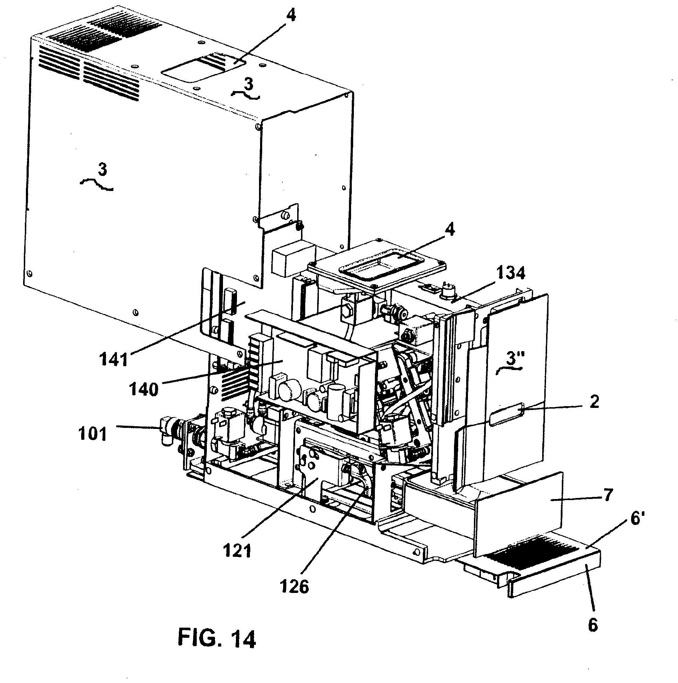

Figures 13 and 14 show in a schematic perspective view the arrangement of some of the parts which are necessary for operation of the machine, including: an electric pump 130 and the heat exchanger 134. The possibility is envisaged of being able to house a second heat exchanger next to the first one. The heat exchanger system 134 is provided, underneath, with the housing for the pod-holding device which is mounted on the support brackets 131, 132, 133.

Figure 14 shows the positioning of the electronic power supply board 140 and the board 141 which manages operation of the machine and is positioned on the rear. The mechanical retaining system is mounted behind the second drawer 7. The handle 126 may be rendered visible by completely extracting the second drawer 7.

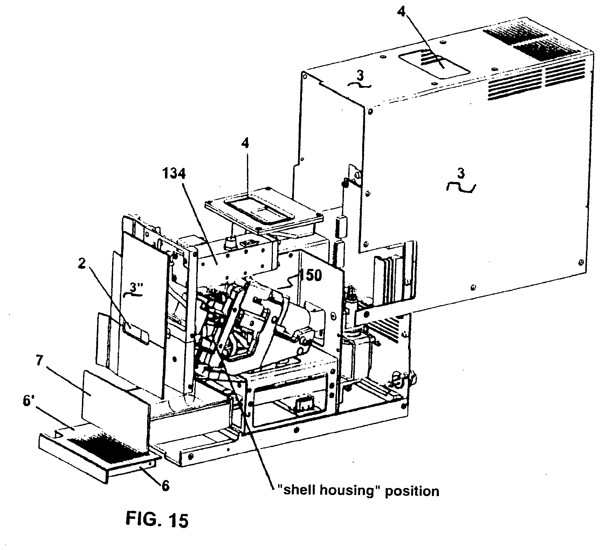

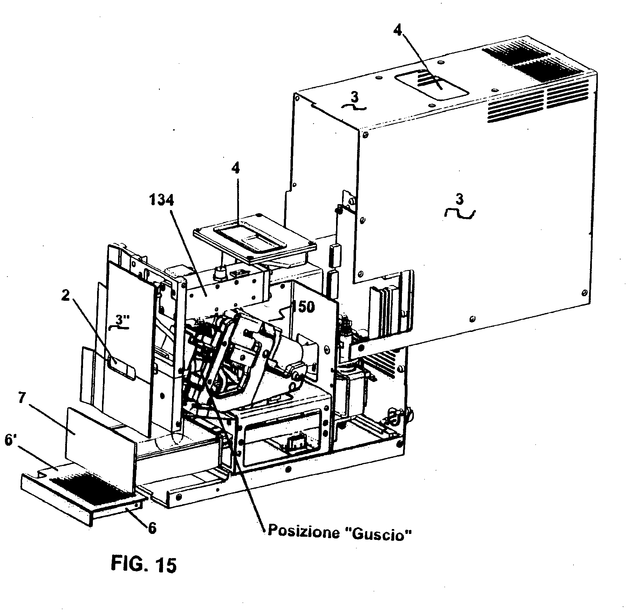

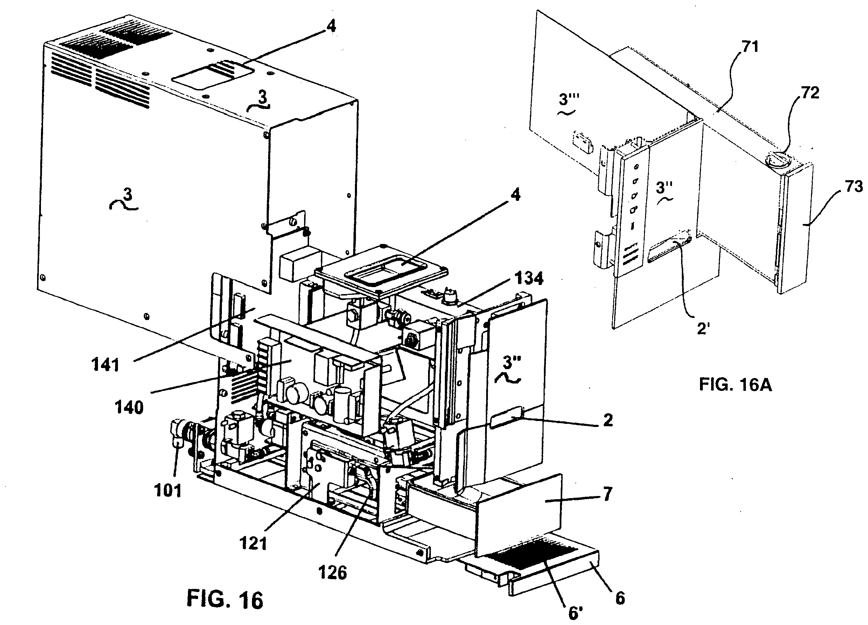

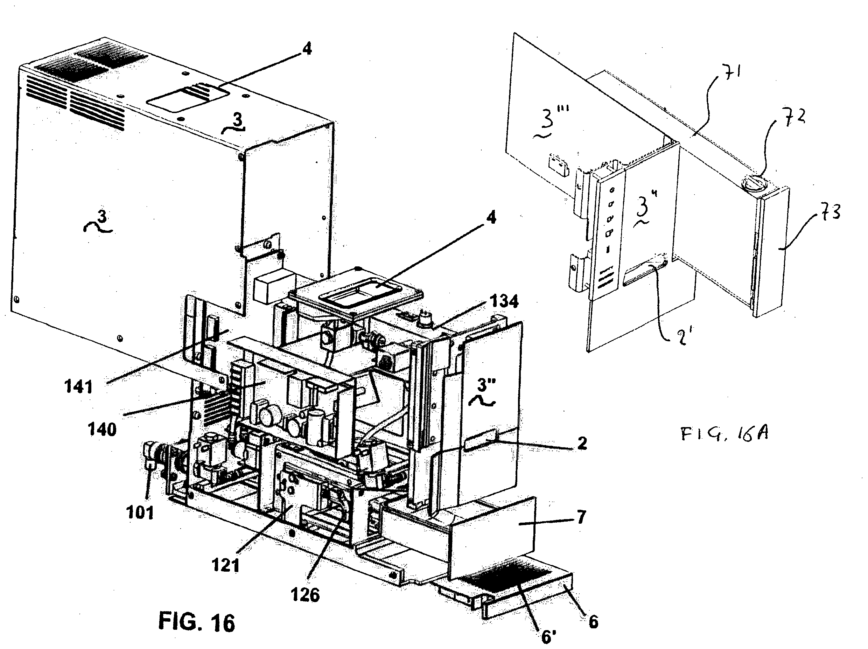

Figures 15 and 16 show the pod-holding unit 150 which is arranged between the heat exchanger 134 and the second drawer 7. The pod-holding unit 150 is positioned so as to receive the pod from the slit 2; it is provided with a housing which may be in the form of a shell and inside which the pod is closed in order to receive the hot water supplied by the heat exchanger 134 and with an expulsion device (not shown) which allows removal by means of simple falling of the used pod into the second drawer 7.

Figures 16A shows a variant of the machine which has, formed in one side, a compartment for housing an extractable water tank 71 which is mounted on slides (not shown) and which has a closing cap 72 and a front cover piece 73. As can be seen from the figure, the tank is suitably screened on the inside of the machine by a partition 3‴ and the front cover piece 73 forms part of the front section 3" in which the slit 2' for insertion of the pods is formed. The tank, with its presence, therefore does not modify nor alter the compact dimensions of the machine and is perfectly integrated inside it. The tank is made of food-grade plastic which is typically transparent and is connected to the heat exchanger system 134.

Figure 17 shows the heat exchanger system 134 complete with electrovalve 176, thermal safety switches 177 and retaining screws 175.

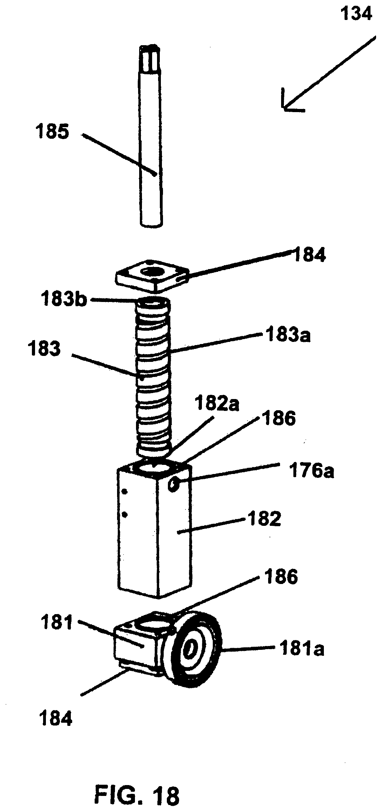

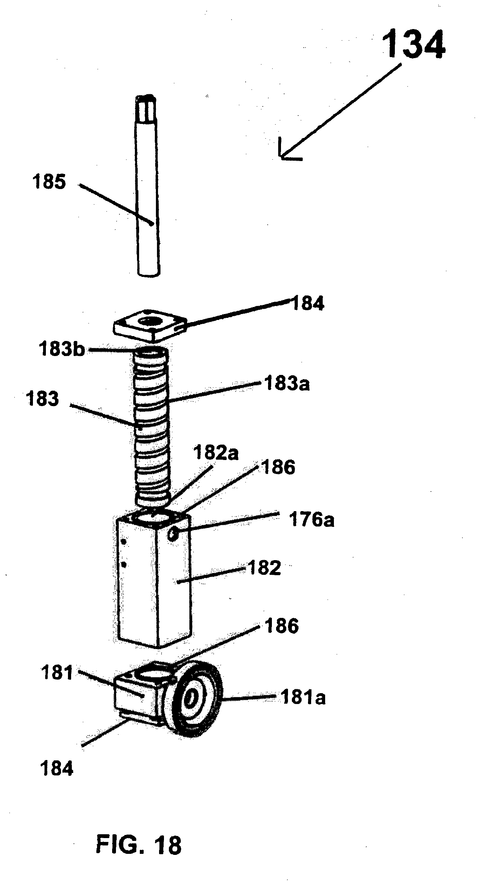

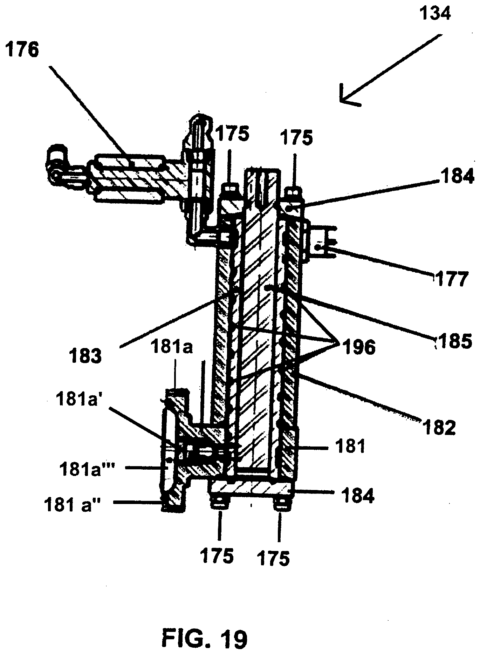

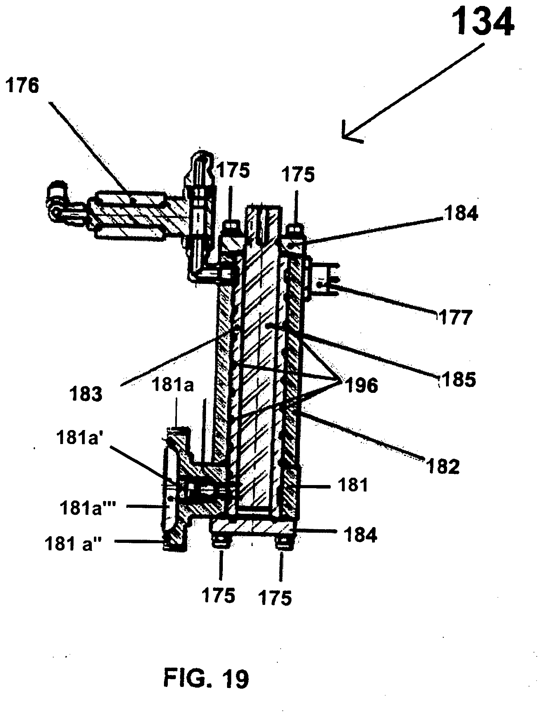

Figure 18 shows the component parts of the heat exchanger which is characterized in that it is of the "open" type in that the water is heated inside it without being under pressure. In fact the heat exchanger is provided with electrovalves at the water inlet and electric compressors at the outlet. The figure shows the support for the compressor 181, which is connected to the actual compressor, which is in turn joined to the part 181a. In the embodiment shown in the figure the compressor and the part 181a are integral with each other since they are made as one piece machined from solid material. The part 181a in turn comprises, in addition to the compressor, the diffuser mushroom 181a', an O-ring seal 181a" and an outer plastic cover (not shown), which have the function of ensuring correct dispensing of the beverages. 181a‴ denotes the recess in the pod-holder seat. The compressor unit 181 / part 181a has the function of imparting to the hot water output from the heat exchanger a pressure such as to ensure efficient extraction of the contents from the pod. The connection between the heat exchanger as a whole and the compressor unit 181 / part 181a of the shell may be performed integrally, as shown in Figure 19, or by means of flexible parts such as connection pipes (not shown). The body of the heat exchanger is mounted, by means of the retaining screws 175, on top of the compressor 181. The heat exchanger comprises the casing 182 which houses internally the heating element 183, or shaft, which is provided with helical grooves 183a and which internally seats the resistance 185. A closing piece 184 helps define the helical space 196 containing the water to be heated.

As shown in Figure 19, the heat exchanger 134 comprises the elongated body with the casing 182 inside which the cylindrical chamber 182a is formed, the latter housing internally the heating element 183. The heating element 183 is provided on its surface with helical grooves 183a which, together with the internal surface of the cylindrical chamber 182a, form an helical passage 196 for the water to be heated. The heating shaft 183 is also provided centrally with a longitudinal cavity 183b which houses the resistance 185. The heat exchanger 134 is further provided with electrovalves 176, thermal fuses and safety probes 177. All the parts are held together by means of retaining screws 175. The tightness of the chamber is ensured by seals. The entry of the water into the exchanger is regulated by the electrovalve 176 which is mounted in the hole 176a. When the water enters into the spiral space 196 it is rapidly heated and the thermal fuses and safety probes 177 respectively protect the system from overheating and allow adjustment of the water temperature. Advantageously the inner and outer surfaces of the heater are lined with a layer of non-stick - for example plastic - material known per se, such as Teflon^{®}, or ceramic material.

The main operating functions of the machine which are managed by dedicated software are briefly mentioned and are as follows: Long Coffee, Short Coffee, Hot Water, Other Functions

The software is responsible for the entire control process necessary for execution of the function required: from verification as to the presence of all the conditions required for activation to completion of the cycle. It may be schematically represented in the form of three main blocks arranged in cascade:
1) Initialization block (Block A)
30 Main Loop Block (Block B)
3) Single Function Block (Block C)

Upon activation of the ON switch the microcontroller is reset and the program starts its execution cycle.

The first step (Block A) is that of preparing all the peripherals of the microprocessor for correct operation. The interrupt cycles are enabled and upon conclusion the RAM is initialized.

With the second step cyclical execution of the code is started (Block B), i.e. all the routines necessary for correct operation and correct management of the machine are subsequently performed, from verification of the correct temperature of the heat exchanger system to verification that a request has been made by the user for dispensing of a beverage.

With the third step (Block C) all the functions of the previous step are implemented in accordance with the operating logic decided during the design stage.

The machine may be advantageously equipped with a second heat exchanger system and a steam dispenser, for example of the type known per se with a movable arm, as well as other components, which can be easily determined from reading of the present invention, for producing steam as well.

The machine according to the present invention has been designed for the preparation of espresso coffee and, under normal conditions, is able to produce 25 ml of short coffee, 40 ml of long coffee and at least 100 ml. of hot water for the preparation of tea, herbal infusions and the reconstitution of freeze-dried beverages.

There is nothing to prevent the machine according to the present invention from being used in other transportation means such as fast trains, aircraft or other forms of locomotion, as well as in restaurants and hotel rooms (complimentary service).

The illustrations shown in the drawings are merely of exemplary nature and a person skilled in the art may make any variations or modifications which do not depart from the scope of the invention. It is understood that these variations and modifications are included within the scope of the description and the claims.

## Claims

1. A built-in machine for dispensing hot beverages, such as coffee or tea, or steam, having a supporting structure with a base (120), a top part, a bottom part, side and rear parts, and a front part (3") provided with a fixed slit (2) for introducing the pods of the beverage to be dispensed and having an open compartment (5) delimited at the bottom by a first drawer (6) for collecting spilled liquids and at the rear by a vertical wall of a second drawer (7) for collecting used pods, which forms the vertical back wall of the open compartment (5); said machine further comprising: a pod-holding unit (150) with a pod-holding shell in turn positioned opposite the slit (2) and provided with a pod-expulsion device located above the second drawer (7); at least one heat exchanger (134) located above the pod-holding unit (150) ' said heat exchanger co-operating with the pod-holding shell; water and electric power supply connections (100, 101) located in the rear part for connection to a corresponding water connector (99) and an electric power supply connector (98) arranged on the short side (90) of the "L" of an L-shaped rail device (D) having on its long side (91) fixing systems for built-in mounting and a hole (111) for receiving the pin (124) of a device for performing fixing to said rail, positioned on the base (120), behind the second drawer (7), wherein the heat exchanger comprises a water inlet and a water outlet and an elongated body provided with a casing (182) internally housing a heating element (183) provided with helical grooves (183a) for passage of the water and centrally with a longitudinal cavity (183b) which houses a resistance (185), passage of the water being sealed between the grooves (183a) and the inner wall of the casing (182) by means of closing parts (184),wherein the inlet of the heat exchanger is provided with a three way electrovalve (176) having a water discharge outlet and wherein the outlet of the heat exchanger is provided with a compressor joined to a part (181a) for connecting to the pod-holding shell.

2. The machine according to Claim 1, wherein the device for performing fixing to the rail device (D) is a latch-type retaining mechanism.

3. The machine according to Claim 2, wherein the retaining mechanism comprises a handle (121), a spring (122), a movement mechanism (123), a pin (124) and a safety screw (125) mounted on a supporting bracket (126).

4. The machine according to one of claims 1-3, wherein the base (120) is configured to slide on the rails (91) of the rail device (D).

5. The machine according to one of claims 1-4, wherein the pin (124) is situated opposite the receiving hole (111).

6. The machine according to one of the preceding claims 1-5, , having the following dimensions: depth 310-417 mm, width 140-180 mm, height 290-340 mm, the width being preferably about 150 mm and the height preferably about 300 mm.

7. The machine according to one of the preceding claims 1-6, wherein the compressor at the outlet of the heat exchanger is an electrical compressor.

## Patentansprüche

1. Einbau-Maschine zur Ausgabe von Heissgetränken, wie beispielsweise Kaffee oder Tee, oder Dampf, aufweisend eine Stützstruktur mit einer Basis (120), einem oberen Teil, einem unteren Teil, Seiten- und Hinterteilen, und einem Frontteil (3"), welches mit einem festen Schlitz (2) zum Einführen der Kapseln des auszugebenden Getränks ausgestattet ist, und ein offenes Abteil (5) aufweist, welches nach unten hin durch eine erste Schublade (6) zur Sammlung von verschütteten Flüssigkeiten begrenzt ist, und nach hinten durch eine vertikale Wand einer zweiten Schublade (7) zur Sammlung von benutzten Kapseln, welche die vertikale Rückwand des offenen Abteils bildet; wobei die Maschine ferner aufweist: eine Kapsel-Halter-Einheit (150) mit einer Kapsel-Halter-Schale, welche wiederum gegenüber vom Schlitz (2) angeordnet ist, und mit einer oberhalb der zweiten Schublade (7) angeordneten Kapsel-Auswurf Vorrichtung ausgestattet ist; sowie mindestens einen Wärmetauscher (134), welcher oberhalb von der Kapsel-Halter-Einheit (150) angeordnet ist, wobei der besagte Wärmetauscher mit der Kapsel-Halter-Schale zusammenwirkt; wobei Anschlüsse (100, 101) für Wasser- und Stromversorgung im Hinterteil angeordnet sind, zur Verbindung an einen entsprechenden Wasseranschluss (99) und einen Stromanschluss (98), welche an der kurzen Seite (90) des "L" einer L-förmigen Schienenvorrichtung (D) angeordnet sind, welche an ihrer langen Seite (91) Befestigungssysteme zur Einbau-Montage aufweisen und eine Bohrung (111) zur Aufnahme des Stifts (124) einer Vorrichtung zur Ausführung der Befestigung, hinter der zweiten Schublade (7), an die besagte auf der Basis (120) befestigten Schiene, wobei der Wärmetauscher einen Wassereinlass und einen Wasserauslass aufweist, und einen länglichen Körper aufweisend ein Gehäuse (182), in dessen Inneren ein Heizelement (183) aufgenommen ist, welches mit spiralförmigen Kerben (183a) ausgebildet ist zur Durchführung des Wassers und zentral mit einem länglichen Hohlraum (183b) ausgebildet ist, in welchem ein Widerstand (185) aufgenommen ist, wobei die Durchführung des Wassers zwischen den Kerben (183a) und der Innenwand des Gehäuses (182) mittels Verschlussteilen (184) abgedichtet ist, wobei der Eingang des Wärmetauschers ein Dreiweg-Elektroventil (176) mit einem Wasserausgabeauslass aufweist, und wobei der Ausgang des Wärmetauschers einen Kompressor aufweist, welcher verbunden ist mit einem Teil (181a) zur Verbindung an die Kapsel-Halter-Schale.

2. Maschine gemäss Anspruch 1, wobei die Vorrichtung zur Ausführung der Befestigung an die Schienenvorrichtung (D) ein Rast-Halte-Mechanismus ist.

3. Maschine gemäss Anspruch 2, wobei der Haltemechanismus einen Griff (121), eine Feder (122), einen Bewegungsmechanismus (123), einen Stift (124) und eine Sicherheitsschraube (125) aufweist, welche auf einem Auflagewinkel (126) befestigt sind.

4. Maschine gemäss einem der Ansprüche 1-3, wobei die Basis (120) ausgebildet ist, auf den Schienen (91) der Schienenvorrichtung (D) zu gleiten.

5. Maschine gemäss einem der Ansprüche 1-4, wobei der Stift (124) gegenüber von der Aufnahmebohrung (111) angeordnet ist.

6. Maschine gemäss einem der vorhergehenden Ansprüche 1-5, aufweisend die folgenden Masse: Tiefe 310-417 mm, Breite 140-180 mm, Höhe 290-340 mm, wobei die Breite vorzugsweise ca. 150 mm und die Höhe vorzugsweise ca. 300 mm beträgt.

7. Maschine gemäss einem der vorhergehenden Ansprüche 1-6, wobei der Kompressor am Ausgang des Wärmetauschers ein Elektrokompressor ist.

## Revendications

1. Une machine intégrée pour distribuer des boissons chaudes, telles que du café ou du thé, ou de la vapeur, ayant une structure de support avec une base (120), une partie supérieure, une partie inférieure, des parties latérales et arrière, et une partie avant (3") munie d'une fente fixe (2) pour l'introduction des dosettes de la boisson à distribuer et comportant un compartiment ouvert (5) délimité en bas par un premier tiroir (6) pour récupérer du liquide renversé et à l'arrière par un second tiroir (7) pour récupérer des dosettes épuisées, qui forme la paroi arrière verticale du compartiment ouvert (5) ; ladite machine comprenant en outre : une unité de maintien de dosette (150) avec une coque de maintien de dosette à son tour positionnée à l'opposé de la fente (2) et munie d'un dispositif d'expulsion de dosettes situé au-dessus du deuxième tiroir (7); au moins un échangeur de chaleur (134) situé au-dessus de l'unité de maintien de dosette (150), ledit échangeur de chaleur coopérant avec la coque de maintien de dosette; des connexions d'alimentation en eau et en électricité (100, 101) situées dans la partie arrière pour le raccordement à une prise d'eau correspondante (99) et un connecteur d'alimentation en électricité (98) disposé sur le petit côté (90) du "L" d'un dispositif à rails en forme de L (D) comportant sur son grand côté (91) des systèmes de fixation pour un montage intégré et un trou (111) pour recevoir la goupille (124) d'un dispositif pour effectuer la fixation audit rail, positionné sur la base (120), derrière le second tiroir (7), dans laquelle l'échangeur de chaleur comprend une entrée d'eau et une sortie d'eau et un corps allongé muni d'une enveloppe (182) logeant intérieurement un élément chauffant (183) muni de rainures hélicoïdales (183a) pour le passage de l'eau et centralement avec une cavité longitudinale (183b) qui loge une résistance (185), le passage de l'eau étant confiné entre les rainures (183a) et la paroi interne de l'enveloppe (182) au moyen de pièces de fermeture (184), dans lequel l'entrée de l'échangeur de chaleur est munie d'une électrovanne à trois voies (176) ayant une sortie d'eau de déversement et dans laquelle la sortie de l'échangeur de chaleur est munie d'un compresseur relié à une partie (181a) pour connecter la coque de maintien de dosettes.

2. La machine selon la revendication 1, dans laquelle le dispositif pour effectuer la fixation au dispositif de rail (D) est un mécanisme de retenue de type verrou.

3. La machine selon la revendication 2, dans laquelle le dispositif de retenue comprend une poignée (121), un ressort (122), un mécanisme de déplacement (123), une goupille (124) et une vis de sécurité (125) montée sur un bloc de support (126).

4. La machine selon l'une des revendications 1 à 3, dans laquelle la base (120) est configurée pour coulisser sur les rails (91) du dispositif à rails (D).

5. La machine selon l'une des revendications 1 à 4, dans laquelle la goupille (124) est située à l'opposé du trou de réception (111).

6. La machine selon l'une des revendications 1 à 5, ayant les dimensions suivantes : une profondeur de 310 à 417 mm, une largeur de 140 à 180 mm, une hauteur de 290 à 340 mm, la largeur étant de préférence d'environ 150 mm et la hauteur de préférence d'environ 300 mm.

7. La machine selon l'une des revendications 1 à 6, dans laquelle la sortie de l'échangeur de chaleur est un compresseur électrique.
